# EUROPÄISCHE PATENTSCHRIFT

(11) **EP 2 246 241 B1**
(45) Veröffentlichungstag und Bekanntmachung des Hinweises auf die Patenterteilung: **08.04.2015**
(21) Anmeldenummer: 10001921.5
(22) Anmeldetag: 25.02.2010
(51) Int. Cl.: B62D 21/02, B62D 21/11

(54) **Trägeranordnung für einen Fahrzeugrahmen eines Nutzfahrzeuges**
Support assembly for the chassis of a commercial vehicle
Agencement de support pour un châssis de véhicule utilitaire

(30) Priorität: 02.05.2009 DE 102009019786
(43) Veröffentlichungstag der Anmeldung: 03.11.2010
(73) Patentinhaber: MAN Truck & Bus AG, 80995 München (DE)
(72) Erfinder: Rossol, Martin, 80997 München (DE); Hornsmann, Martin, 81541 München (DE); Gök, Mustafa, 80807 München (DE)

(56) Entgegenhaltungen:
- EP-A1- 0 940 272
- EP-A2- 1 359 031
- DE-A1-102005 028 309
- DE-C1- 10 158 107

## Beschreibung

Die Erfindung betrifft eine Trägeranordnung für einen Fahrzeugrahmen eines Nutzfahrzeuges nach dem Oberbegriff des Anspruchs 1.

Trägeranordnungen für Nutzfahrzeuge sind allgemein bekannt, so zum Beispiel aus der DE 10 2006 041 664 A1. Dort ist eine Trägeranordnung für einen Fahrzeugrahmen eines Nutzfahrzeuges beschrieben, bei dem ein zwischen zwei Rahmenlängsträgern des Fahrzeugrahmens verlaufender Querträger mittels Befestigungsschuhe genannten Trägerkonsolen unmittelbar an den jeweils zugeordneten Rahmenlängsträgern angebunden ist. Der Querträger wird hierzu in die Trägerkonsolen eingesteckt, wobei die Trägerkonsolen dann anschließend an den Rahmenlängsträgern festgelegt werden. Die beiden Trägerkonsolen der Trägeranordnung weisen eine Mehrzahl von Befestigungsstellen auf, die Gewindebohrungen umfassen, an welche weitere Funktionsbaugruppen, insbesondere Dreiecklenker, Stabilisatoren, Feder-Dämfper-Elemente oder Lenker der Achsanordnung einer Hinterachse bzw. einer Hinterachsbaugruppe befestigt werden können. Die EP 1 359 031 A2 offenbart ein Fahrgestell für ein Nutzfahrzeug, insbesondere Lastkraftwagen, mit einem Frontmodul, das an jeder Fahrzeugseite ein Längsträgerteil aufweist, die über wenigstens einen Querträger miteinander verbunden sind, und mit einem Achsmodul, das einen U-Bügel aufweist, der die Längsträgerteile von unten und außen umgreift und der mit seinen U-Schenkeln an jeder Fahrzeugseite jeweils in einer ersten Kopplungszone der Längsträgerteile außen an den Längsträgerteilen befestigt ist. Zum Stand der Technik kann ferner auf die EP 0 940 272 A1, die DE 10 2005 028309 A1 und die DE 101 58 107 C1 verwiesen werden.

Demgegenüber ist es Aufgabe der vorliegenden Erfindung, eine Trägeranordnung für einen Fahrzeugrahmen eines Nutzfahrzeuges zur Verfügung zu stellen, die eine höhere Flexibilität im Rahmen der Montage und der Demontage der einzelnen Trägeranordnungsbauteile erlaubt.

Diese Aufgabe wird gelöst mit den Merkmalen des Anspruchs 1. Bevorzugte Ausgestaltungen sind Gegenstand der Unteransprüche.

Gemäß Anspruch 1 weist die Trägeranordnung einen zwischen zwei Rahmenlängsträgern des Fahrzeugrahmens verlaufenden Querträger auf, der insbesondere als achsführender Querträger ausgebildet ist und der im montierten Zustand mittels Querträger-Anbindungsbereichen mittelbar oder unmittelbar an den Rahmenlängsträgern angebunden ist. Den Querträgerendbereichen sind Trägerkonsolen zugeordnet, an denen wenigstens ein Funktionsteil, insbesondere ein Mehrpunktlenker, angebunden ist. Erfindungsgemäß ist vorgesehen, dass wenigstens eine der Trägerkonsolen, bevorzugt beide Trägerkonslen, im montierten Zustand als separat handhabbares Bauteil am Querträger, bevorzugt an dem der Trägerkonsole zugeordneten Querträger-Anbindungsbereich, festgelegt ist und/oder dass wenigstens eine der Trägerkonsolen, bevorzugt beide Trägerkonsolen, den jeweils zugeordneten Querträgerbereich mit einem konsolenseitigen Umgriffsbereich wenigstens bereichsweise umgreift.

Mit einer derartigen, gemäß dem ersten Erfindungsaspekt bevorzugten ausschließlichen Festlegung der Trägerkonsole am Querträger, insbesondere am Querträger-Anbindungsbereich, ergibt sich eine erhöhte Montageflexibilität, da die Trägerkonsolen sowohl gleichzeitig mit dem Querträger als auch unabhängig davon zu einem späteren Zeitpunkt am Fahrzeug verbaut werden können. Ebenso ergeben sich dadurch auch Vorteile im Reparatur- und Servicefall, da die Trägerkonsolen in Verbindung mit zum Beispiel lösbaren Kraftschlussverbindungen, auch unabhängig vom Querträger demontiert werden können. Unter einer "ausschließlich querträgerseitigen" Festlegung im Sinne der vorliegenden Erfindung wird dabei vor allem eine solche Festlegung verstanden, bei der die Trägerkonsole nicht wie beim vorgenannten Stand der Technik der DE 10 2006 041 664 A1 gleichzeitig als Querträger-Anbindungsbereich fungiert, der unmittelbar und direkt am Rahmenlängsträger angebunden wird, sondern als separat handhabbare Trägerkonsole ausgebildet ist, die unabhängig von einer mittelbaren oder unmittelbaren Querträgeranbindung am Rahmenlängsträger querträgerseitig festgelegt wird.

Mit der separat und unabhängig davon beanspruchten Ausbildung eines konsolenseitigen Umgriffsbereichs kann zudem eine vorteilhafte Versteifung des Querträgers ohne die Notwendigkeit einer direkten Verbindung desselben mit dem Umgriffsbereich und damit der Trägerkonsole zur Verfügung gestellt werden, insbesondere wenn dieser aus einem torsionssteifen, geschlossenen Profil, zum Beispiel einem Hohlprofil besteht. Unter einer direkten Verbindung wird dabei vor allem eine kraftschlüssige und/oder eine stoffschlüssige Verbindung verstanden. Anstelle eines Hohlprofils kann auch ein offenes Querträgerprofil, zum Beispiel ein U- oder Z-Profil eingesetzt werden. Auch ein Vollprofil, zum Beispiel als Vollstab, ist grundsätzlich denkbar.

Beide zuvor genannten Erfindungsvarianten, nämlich die querträgerseitige Festlegung der Trägerkonsole einerseits und die Ausbildung eine Umgriffsbereichs andererseits, werden ausdrücklich separat beansprucht, wobei jedoch die Kombination beider Ausführungsvarianten eine bevorzugte Ausgestaltung darstellt, mittels der ein torsionssteifes Fahrgestell verwirklicht werden kann, bei dem die Trägerkonsolen auf einfache Weise flexibel vor oder nach dem Einbau des Querträgers am Fahrzeug verbaut werden können.

Gemäß einer bevorzugten konkreten Ausgestaltung ist wenigstens einer der Querträger-Anbindungsbereiche, bevorzugt jedoch beide Querträger-Anbindungsbereiche, durch eine integral mit dem Querträger ausgebildete oder durch eine als separates Bauteil mit dem Querträger verbindbare Flanschplattenkonstruktion mit einer Flanschplatte gebildet, an der die zugeordnete Trägerkonsole mit einem konsolenseitigen, bevorzugt ebenfalls plattenartig ausgebildeten Flanschbereich angebunden ist. Eine derartige Flanschanbindung ermöglicht eine besonders gute Abstützung und Krafteinleitung über den Querträger in den Rahmenlängsträger bzw. umgekehrt.

Der Umgriff der Trägerkonsole im Hinblick auf den zugeordneten Querträgerbereich ist bevorzugt dergestalt ausgebildet, dass der konsolenseitige Umgriffsbereich den Querträger an vorgegebenen, definierten Querträgerbereichen mit einem definierten Spaltabstand umgreift bzw. alternativ dazu an vorgegebenen, definierten Querträgerbereichen in einer bevorzugt formschlüssigen Anlageverbindung anliegt. Der konsolenseitige Umgriffsbereich ist wenigstens in Teilbereichen halbschalenartig ausgebildet und/oder er umgreift den zugeordneten Querträgerbereich in Abhängigkeit von einem definierten Spaltabstand wenigstens bereichsweise mit einem Umgriffswinkel von bevorzugt bis in etwa 270°, höchst bevorzugt bis in etwa 180°. Die zuvor beschriebenen konkreten Ausgestaltungsmöglichkeiten des konsolenseitigen Umgriffsbereichs ermöglichen eine besonders platzsparende Anordnung der Trägerkonsolen bzw. eine auf die jeweiligen Einsatzfälle genau abgestimmte Aussteifung des zugeordneten Querträgerbereiches.

Für eine besonders kompakte Ausgestaltung ist vorgesehen, dass der konsolenseitige Umgriffsbereich in einem der Umgriffsöffnung gegenüberliegenden Konsolenbereich wenigstens eine Anbindungsstelle für ein Funktionsteil, insbesondere für einen Lenker eines Mehrpunktlenkers aufweist.

Die Trägerkonsole kann grundsätzlich auf beliebige Weise an dem Querträger bzw. bevorzugt dem Querträger-Anbindungsbereich festgelegt sein, zum Beispiel mittels wenigstens einer Kraftschluss- und/oder Formschluss- und/oder Stoffschlussverbindung, das heißt lösbar oder auch unlösbar, festgelegt sein. Die lösbare Anbindung, zum Beispiel in Verbindung mittels mehrerer Schraubverbindungen stellt eine bevorzugte Ausführungsform dar, da dadurch auch eine Demontage der einzelnen Bauteile, zum Beispiel im Reparaturfall, einfacher durchzuführen ist als dies zum Beispiel bei stoffschlüssigen Verbindungen der Fall ist.

Die Trägerkonsole kann dabei direkt, das heißt unmittelbar an dem zugeordneten Querträgerbereich angebunden werden. Alternativ dazu ist jedoch auch grundsätzlich eine mittelbare Anbindung der Trägerkonsole an dem zugeordneten Querträgerbereich denkbar, zum Beispiel über Zwischenbleche oder dergleichen. Das Gleiche gilt für die Anbindung der Trägerkonsole an dem jeweils zugeordneten Rahmenlängsträger.

Des Weiteren ist es grundsätzlich möglich, die gegenüberliegenden Querträgerendbereiche bzw. die gegenüberliegenden Querträger-Anbindungsbereiche unterschiedlich auszugestalten. Fertigungs- und produktionstechnisch bzw. auch montagetechnisch bevorzugt ist jedoch ein Aufbau, bei dem die an beiden Querträgerendbereichen ausgebildeten Querträger-Anbindungsbereiche bzw. die querträgerseitig festgelegten Trägerkonsolen jeweils als symmetrische Gleichteile ausgebildet sind.

Die Erfindung wird nachfolgend anhand mehrerer Figuren näher erläutert.

Es zeigen:
- Fig. 1.: schematisch eine perspektivische Seitenansicht einer erfindungsgemäßen Trägeranordnung;
- Fig. 2: die erfindungsgemäße Trägeranordnung gemäß Fig. 1 in einer alternativen perspektivischen Seitenansicht;
- Fig. 3: eine schematische Vorderansicht des Querträgers mitsamt Querträger-Flanschplatte und an der Querträger-Flanschplatte angebundenem konsolenseitigen Flanschbereich;
- Fig. 4: eine Draufsicht auf den Zusammenbau der Fig. 3 mitsamt angebundenem Mehrpunktlenker;
- Fig.5: schematisch eine vergrößerte, perspektivische Teilansicht von Querträgerendbereich, Querträger-Flanschplatte und Trägerkonsole;
- Fig. 6: schematisch eine rückwärtige Ansicht des Mehrpunktlenker-Anbindungsbereiches der Trägerkonsole;
- Fig. 7: schematisch eine Vorderansicht des halbschalenartigen Umgriffsbereichs der Trägerkonsole; und
- Fig. 8: schematisch eine Seitenansicht der Trägerkonsole.

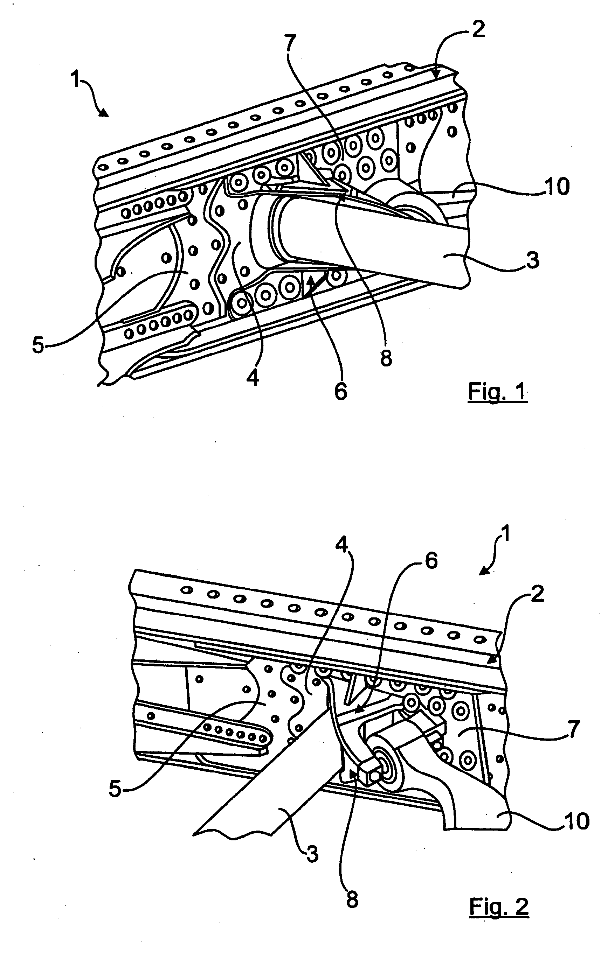

In der Fig. 1 ist schematisch eine perspektivische Seitenansicht eines hier beispielhaft rechten Rahmenlängsträgers 2 eines Fahrzeugrahmens 1 gezeigt, an den ein als geschlossenes Hohlprofil ausgebildeter Querträger 3 mittels einer Querträger-Flanschplatte 4, hier beispielhaft unter Zwischenschaltung eines Zwischenblechs 5, zum Beispiel kraftschlüssig mittels mehrerer Schraubverbindungen, die hier allerdings nicht dargestellt sind, angebunden ist.

Die Querträger-Flanschplatte 4 ist hier weiter beispielhaft als separates Bauteil ausgebildet, in das der Querträger 3 mit seinem Querträgerende im Wesentlichen formschlüssig eingeschoben bzw. eingesetzt ist.

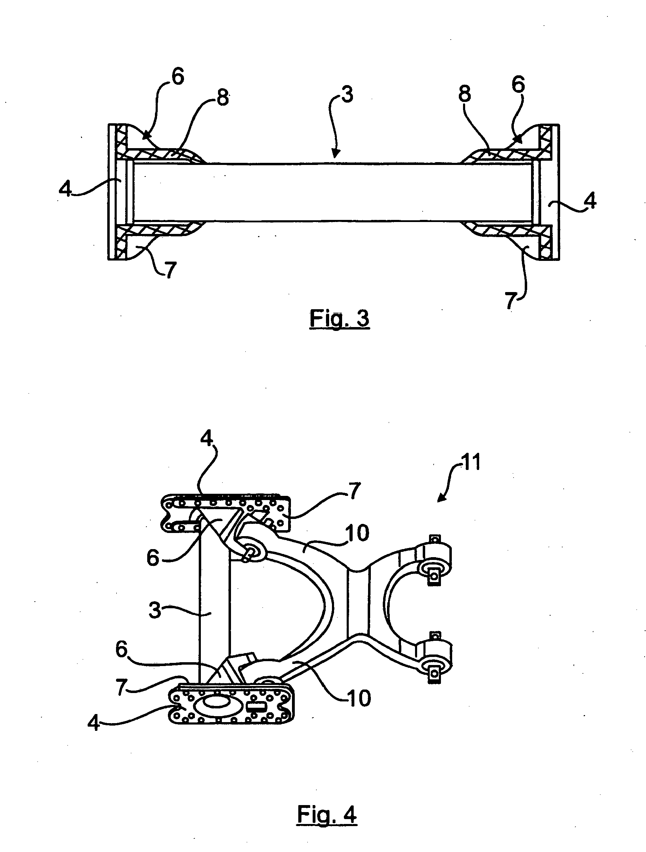

Wie dies weiter insbesondere auch aus den Fig. 3, 4 und 5 ersichtlich ist, ist eine Trägerkonsole 6 mit einem konsolenseitigen Flanschbereich 7 unmittelbar an der Querträger-Flanschplatte 4 festgelegt, zum Beispiel ebenfalls kraftschlüssig mittels hier nicht gezeigter Schraubverbindungen. Durch diese ausschließlich querträgerseitige Anbindung des konsolenseitigen Flanschbereichs 7 an der Querträger-Flanschplatte 4 wird auf einfache Weise sichergestellt, dass die Trägerkonsole auch unabhängig vom Verbau des Querträgers 3 am Fahrzeugrahmen montiert werden kann.

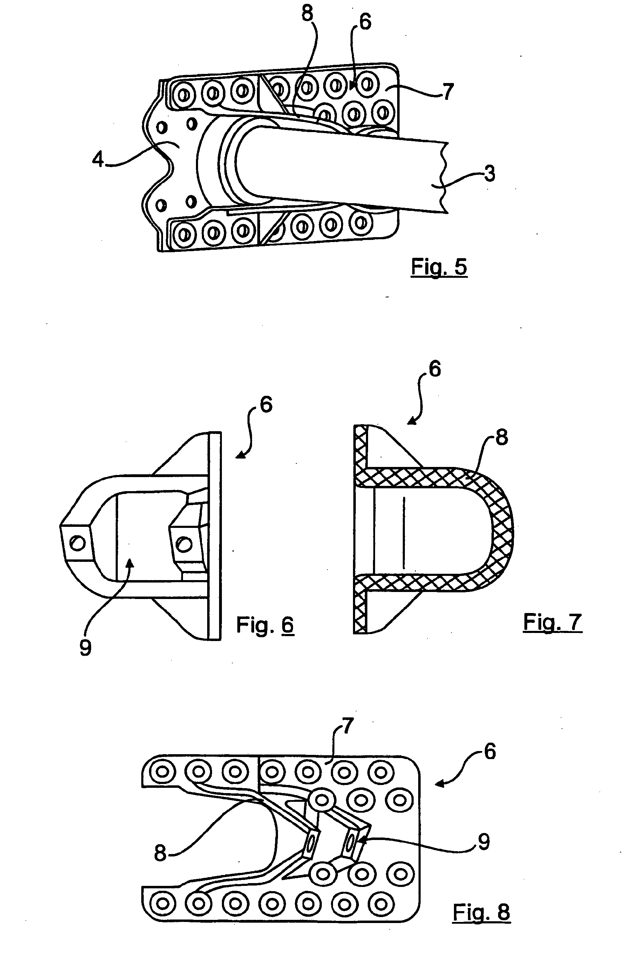

Wie dies insbesondere auch den Fig. 7 und 8 weiter entnommen werden kann, weist die Trägerkonsole 6 im Anschluss an den konsolenseitigen Flanschbereich 7 einen konsolenseitigen Umgriffsbereich 8 auf, der hier halbschalenartig ausgebildet ist und den zugeordneten Querträgerbereich im Bereich der Anbindung des Umgriffsbereichs 8 am konsolenseitigen Flanschbereich 7 mit einem Winkel von hier beispielhaft in etwa 180° umgreift. In Richtung zur Querträgermitte hin reduziert sich dagegen bei der hier gezeigten Ausführungsvariante der Umgriffswinkel des Umgriffsbereichs 8 stetig.

Der Umgriffsbereich 8 kann dabei mit wenigstens einem Teilbereich in einer formschlüssigen Anlageverbindung an dem Querträger 3 bzw. an der den Querträger-Anbindungsbereich ausbildenden Querträger-Flanschplatte 4 anliegen.

Wie dies weiter sehr gut aus den Fig. 2, 4, 6 und 8 ersichtlich ist, weist der konsolenseitige Umgriffsbereich 8 in einem der Umgriffsöffnung gegenüberliegenden Konsolenbereich eine Anbindungsstelle 9 für einen Lenker 10 eines Mehrpunktlenkers 11 auf. Der Mehrpunktlenker 11 ist insbesondere aus der Fig. 4 gut ersichtlich, die den Mehrpunktlenker 11 beispielhaft als Vierpunktlenker zeigt. Grundsätzlich könnte selbstverständlich auch ein Dreiecklenker eingesetzt werden, was hier aber nicht dargestellt ist. Die Anbindung der Mehrpunktlenker 11 erfolgt bevorzugt über Elastomerlager.

Wie dies weiter insbesondere aus den Fig. 3 und 4 ersichtlich ist, sind die Querträger-Flanschplatten 4 und die Trägerkonsolen 6 jeweils als symmetrische Gleichteile ausgebildet, so dass sich auf den gegenüberliegenden Querträgerseiten gleiche Anbindungsverhältnisse ergeben.

## Patentansprüche

1. Trägeranordnung für einen Fahrzeugrahmen eines Nutzfahrzeuges,
mit einem zwischen zwei Rahmenlängsträgern des Fahrzeugrahmens verlaufenden Querträger, insbesondere einem achsführenden Querträger, der im montierten Zustand mittels Querträger-Anbindungsbereichen mittelbar oder unmittelbar an den Rahmenlängsträgern angebunden ist,
und mit den Querträgerendbereichen zugeordneten Trägerkonsolen (6), an denen ein Funktionsteil, insbesondere ein Mehrpunktlenker, angebunden ist, und wenigstens eine Trägerkonsole (6), bevorzugt beide Trägerkonsolen (6), im montierten Zustand am Querträger (3) festgelegt ist,
wobei die wenigstens eine Trägerkonsole (6) den jeweils zugeordneten Querträgerendbereich mit einem konsolenseitigen Umgriffsbereich (8) wenigstens bereichsweise umgreift,
**dadurch gekennzeichnet, dass**
der konsolenseitige Umgriffsbereich (8) wenigstens in Teilbereichen halbschalenartig ausgebildet ist und/oder den zugeordneten Querträgerbereich in Abhängigkeit von einem definierten Spaltabstand wenigstens bereichsweise mit einem Umgriffswinkel von bis in etwa 270° oder bis in etwa 180° umgreift.

2. Trägeranordnung nach Anspruch 1, **dadurch gekennzeichnet, dass** die wenigstens eine Trägerkonsole zur querträgerseitigen Anbindung wenigstens an dem jeweils zugeordneten Querträger-Anbindungsbereich (4) festgelegt ist.

3. Trägeranordnung nach Anspruch 2, **dadurch gekennzeichnet, dass** wenigstens derjenige Querträger-Anbindungsbereich (4), an dem die Trägerkonsole (6) angebunden ist, durch eine integral mit dem Querträger (3) ausgebildete oder durch eine als separates Bauteil mit dem Querträger (3) verbindbare Flanschplatte gebildet ist, an der die zugeordnete Trägerkonsole (6) mit einem konsolenseitigen, bevorzugt ebenfalls plattenartig ausgebildeten Flanschbereich (7) angebunden ist.

4. Trägeranordnung nach einem der Ansprüche 1 bis 3, **dadurch gekennzeichnet, dass** die Trägerkonsole (6) den Querträger (3) mit dem konsolenseitigen Umgriffsbereich (8) wenigstens bereichsweise dergestalt umgreift, dass der konsolenseitige Umgriffsbereich (8) den Querträger (3) an vorgegebenen, definierten Querträgerbereichen mit einem definierten Spaltabstand umgreift oder an vorgegebenen, definierten Querträgerbereichen in einer formschlüssigen Anlagevorbindung anliegt.

5. Trägeranordnung nach einem der Ansprüche 1 bis 4, **dadurch gekennzeichnet, dass** der konsolenseitige Umgriffsbereich (8) in einem der Umgriffsöffnung gegenüberliegenden Konsolenbereich wenigstens eine Anbindungsstelle (9) für ein Funktionsteil, insbesondere für einen Lenker (10) eines Mehrpunktlenkers (11) aufweist.

6. Trägeranordnung nach einem der Ansprüche 1 bis 5, **dadurch gekennzeichnet, dass** die Trägerkonsole (6) mittels wenigstens einer Kraftschluss- und/oder Formschluss- und/oder Stoffschlussverbindung an dem Querträger-Anbindungsbereich festgelegt ist, insbesondere dort mittels wenigstens einer Schraubverbindung lösbar festgelegt ist.

7. Trägeranordnung nach einem der Ansprüche 1 bis 6, **dadurch gekennzeichnet, dass** die Trägerkonsole (6) mittelbar oder unmittelbar an dem Querträger, bevorzugt an dem jeweils zugeordneten Querträger-Anbindungsbereich (4) und/oder an dem jeweils zugeordneten Rahmenlängsträger angebunden ist.

8. Trägeranordnung nach einem der Ansprüche 1 bis 7, **dadurch gekennzeichnet, dass** die an beiden Querträgerendbereichen ausgebildeten beiden Querträger-Anbindungsbereiche (4) und/oder die beiden querträgerseitig festgelegten Trägerkonsolen (6) als symmetrische Gleichteile ausgebildet sind.

9. Trägeranordnung nach einem der Ansprüche 1 bis 8, **dadurch gekennzeichnet, dass** der Querträger (3) durch ein geschlossenes oder offenes Profil, insbesondere ein Hohlprofil, oder durch ein Vollprofil gebildet ist.

## Claims

1. Support arrangement for a vehicle frame of a commercial vehicle, having a crossmember, in particular an axle-locating crossmember, which runs between two frame longitudinal rails of the vehicle frame and, in the mounted state, is attached to the frame longitudinal rails directly or indirectly by means of crossmember attachment regions, and having support brackets (6) which are assigned to the crossmember end regions and to which a functional part, in particular a multi-point link, is attached, and at least one support bracket (6), preferably both support brackets (6), is/are fixed to the crossmember (3) in the mounted state, the at least one support bracket (6) engaging at least in regions with a bracket-side engagement region (8) around the respectively associated crossmember end region, **characterized in that** the bracket-side engagement region (8) is of half shell-like configuration at least in part regions and/or engages at least in regions around the associated crossmember region depending on a defined gap distance with an engagement angle of up to approximately 270° or up to approximately 180°.

2. Support arrangement according to Claim 1, **characterized in that** the at least one support bracket is fixed for the crossmember-side attachment at least on the respectively associated crossmember attachment region (4).

3. Support arrangement according to Claim 2, **characterized in that** at least that crossmember attachment region (4), to which the support bracket (6) is attached, is formed by a flange plate which is configured integrally with the crossmember (3) or can be connected as a separate component to the crossmember (3) and to which the associated support bracket (6) is attached by way of a bracket-side flange region (7) which is preferably likewise of plate-like configuration.

4. Support arrangement according to one of Claims 1 to 3, **characterized in that** the support bracket (6) engages around the crossmember (3) by way of the bracket-side engagement region (8) at least in regions in such a way that the bracket-side engagement region (8) engages around the crossmember (3) at predetermined, defined crossmember regions with a defined gap spacing or bears against predetermined, defined crossmember regions in a positively locking bearing connection.

5. Support arrangement according to one of Claims 1 to 4, **characterized in that**, in a bracket region which lies opposite the engagement opening, the bracket-side engagement region (8) has at least one attachment point (9) for a functional part, in particular for a link (10) of a multi-point link (11).

6. Support arrangement according to one of Claims 1 to 5, **characterized in that** the support bracket (6) is fixed to the crossmember attachment region by means of at least one non-positive and/or positively locking and/or integrally joined connection, in particular is fixed releasably there by means of at least one screw connection.

7. Support arrangement according to one of Claims 1 to 6, **characterized in that** the support bracket (6) is attached indirectly or directly to the crossmember, preferably to the respectively associated crossmember attachment region (4) and/or to the respectively associated frame longitudinal rail.

8. Support arrangement according to one of Claims 1 to 7, **characterized in that** the two crossmember attachment regions (4) which are configured on both crossmember end regions and/or the two support brackets (6) which are fixed on the crossmember side are configured as symmetrical identical parts.

9. Support arrangement according to one of Claims 1 to 8, **characterized in that** the crossmember (3) is formed by a closed or open profile, in particular a hollow profile, or by a solid profile.

## Revendications

1. Agencement de support pour un châssis de véhicule utilitaire,
comprenant une traverse s'étendant entre deux longerons de châssis du châssis de véhicule, en particulier une traverse de guidage d'essieu qui, à l'état monté, est connectée directement ou indirectement aux longerons de châssis au moyen de régions de connexion de traverse,
et comprenant des consoles de support (6) associées aux régions d'extrémité de traverse, auxquelles consoles de support est connectée une partie fonctionnelle, en particulier un bras oscillant à plusieurs points, et au moins une console de support (6), de préférence les deux consoles de support (6), est/sont fixée(s) à la traverse (3) à l'état monté,
l'au moins une console de support (6) venant en prise au moins dans certaines régions autour de la région d'extrémité de traverse respectivement associée par une région de prise (8) du côté de la console,
**caractérisé en ce que**
la région de prise (8) du côté de la console est réalisée en forme de demi-coque au moins dans des régions partielles et/ou vient en prise autour de la région de traverse associée au moins dans certaines régions avec un angle de prise de jusqu'à environ 270° ou jusqu'à environ 180° en fonction d'une distance d'espacement définie.

2. Agencement de support selon la revendication 1, **caractérisé en ce que** l'au moins une console de support est fixée au moins à la région de connexion de traverse (4) respectivement associée pour la connexion du côté de la traverse.

3. Agencement de support selon la revendication 2, **caractérisé en ce qu'**au moins cette région de connexion de traverse (4) à laquelle la console de support (6) est connectée est formée par une plaque de bride réalisée d'un seul tenant avec la traverse (3) ou par une plaque de bride pouvant être reliée à la traverse (3) en tant que partie structurale séparée, à laquelle plaque de bride est connectée la console de support (6) associée par une région de bride (7) du côté de la console, réalisée de préférence également en forme de plaque.

4. Agencement de support selon l'une quelconque des revendications 1 à 3, **caractérisé en ce que** la console de support (6) vient en prise au moins dans certaines régions autour de la traverse (3) par la région de prise (8) du côté de la console, de telle sorte que la région de prise (8) du côté de la console vienne en prise autour de la traverse (3) au niveau de régions de traverse définies prédéterminées avec une distance d'espacement définie ou s'applique contre des régions de traverse définies prédéterminées suivant une liaison d'appui par engagement par complémentarité de formes.

5. Agencement de support selon l'une quelconque des revendications 1 à 4, **caractérisé en ce que** la région de prise (8) du côté de la console comprend, dans une région de console opposée à l'ouverture de prise, au moins un point de connexion (9) pour une partie fonctionnelle, en particulier pour un bras oscillant (10) d'un bras oscillant à plusieurs points (11).

6. Agencement de support selon l'une quelconque des revendications 1 à 5, **caractérisé en ce que** la console de support (6) est fixée à la région de connexion de traverse au moyen d'au moins une liaison par force et/ou par engagement par complémentarité de formes et/ou par liaison ce matière, en particulier y est fixée de manière amovible au moyen d'au moins une liaison par vissage.

7. Agencement de support selon l'une quelconque des revendications 1 à 6, **caractérisé en ce que** la console de support (6) est connectée directement ou indirectement à la traverse, de préférence à la région de connexion de traverse (4) respectivement associée et/ou au longeron de châssis respectivement associé.

8. Agencement de support selon l'une quelconque des revendications 1 à 7, **caractérisé en ce que** les deux régions de connexion de traverse (4) réalisées au niveau des deux régions d'extrémité de traverse et/ou les deux consoles de support (6) fixées du côté de la traverse sont réalisées sous forme de parties identiques symétriques.

9. Agencement de support selon l'une quelconque des revendications 1 à 8, **caractérisé en ce que** la traverse (3) est formée par un profilé fermé ou ouvert, en particulier un profilé creux, ou par un profilé plein.
